# EUROPÄISCHE PATENTSCHRIFT

(11) **EP 4 558 349 B1**
(45) Veröffentlichungstag und Bekanntmachung des Hinweises auf die Patenterteilung: **10.12.2025**
(21) Anmeldenummer: 23745111.7
(22) Anmeldetag: 14.07.2023
(51) Int. Cl.: B60L 3/00, B60L 3/04, B60L 53/10, B60L 53/14, B60L 53/20, H02H 3/14, H02H 3/16, H02H 3/087, H02H 3/10

(54) **FAHRZEUG MIT EINEM HOCHVOLTBORDNETZ UND VERFAHREN ZUM BETRIEB DES HOCHVOLTBORDNETZES**
VEHICLE WITH A HIGH-VOLTAGE ELECTRICAL SYSTEM AND METHOD FOR OPERATING THE HIGH-VOLTAGE ELECTRICAL SYSTEM
VÉHICULE ÉQUIPÉ D'UN RÉSEAU DE BORD HAUTE TENSION ET PROCÉDÉ DE FONCTIONNEMENT DU RÉSEAU DE BORD HAUTE TENSION

(30) Priorität: 18.07.2022 DE 102022002596
(43) Veröffentlichungstag der Anmeldung: 28.05.2025
(73) Patentinhaber: Mercedes-Benz Group AG, 70372 Stuttgart (DE)
(72) Erfinder: WEIGOLD, Jörg, 70327 Stuttgart (DE); BOEHME, Urs, 71139 Ehningen (DE); SEIFFERT, Stefan, 70794 Filderstadt (DE)
(74) Vertreter: Novagraaf Group
(86) Internationale Anmeldenummer: PCT/EP2023/069732
(87) Internationale Veröffentlichungsnummer: WO 2024/017806

(56) Entgegenhaltungen:
- DE-A1- 102015 116 106
- DE-A1- 102016 211 387
- DE-A1- 102017 113 533
- DE-A1- 102017 214 302
- DE-A1- 102021 003 850
- DE-A1- 102021 003 884
- DE-B3- 102021 205 819
- JP-A- 2010 239 845

## Beschreibung

Die Erfindung betrifft ein Fahrzeug mit einem Hochvoltbordnetz nach den Merkmalen des Oberbegriffs des Anspruchs 1 und ein Verfahren zum Betrieb des Hochvoltbordnetzes. Aus dem Stand der Technik sind, wie in der DE 10 2017 009 352 A1 beschrieben, ein Energiekoppler zum elektrischen Koppeln von elektrischen Bordnetzen und ein Verfahren zum elektrischen Koppeln von elektrischen Bordnetzen bekannt. Der Energiekoppler zum elektrischen Koppeln eines mit einer ersten elektrischen Gleichspannung beaufschlagten ersten elektrischen Bordnetzes mit einem mit einer zweiten elektrischen Gleichspannung beaufschlagten zweiten elektrischen Bordnetz weist einen ersten und einen zweiten getakteten Energiewandler auf, die jeweils einen Bordnetzanschluss und einen Zwischenkreisanschluss aufweisen. Der Bordnetzanschluss des ersten getakteten Energiewandlers ist an das erste Bordnetz angeschlossen und der Bordnetzanschluss des zweiten getakteten Energiewandlers ist an das zweite Bordnetz angeschlossen. Die Zwischenkreisanschlüsse des ersten und des zweiten getakteten Energiewandlers sind an einen gemeinsamen Gleichspannungszwischenkreis angeschlossen. Ein erstes elektrisches Potential des Gleichspannungszwischenkreises ist mittels des ersten getakteten Energiewandlers mit einem der elektrischen Potentiale des ersten Bordnetzes elektrisch verbunden. Ein zweites elektrisches Potential des Gleichspannungszwischenkreises ist mittels des zweiten getakteten Energiewandlers mit einem der elektrischen Potentiale des zweiten Bordnetzes elektrisch verbunden.

Aus DE 10 2021 205819 B3 ist eine Koppelschaltung für ein elektrisches Fahrzeug bekannt, die zwischen einer Ladestation und der Batterie des Fahrzeugs einseitig - also zwischen dem positiven Anschluss der Ladestation und Neutralpotential - einen Gleichspannungswandler aufweist.

Aus JP 2010 239845 A und DE 10 2021 003884 A1 sind Isolationsschutzschaltungen bekannt, um Isolationsfehler in der Ladekette zu erkennen und im Fehlerfall einen sicheren Zustand herzustellen.

Der Erfindung liegt die Aufgabe zu Grunde, ein Fahrzeug mit einem gegenüber dem Stand der Technik verbesserten Hochvoltbordnetz und ein verbessertes Verfahren zum Betrieb des Hochvoltbordnetzes anzugeben.

Die Aufgabe wird erfindungsgemäß gelöst durch ein Fahrzeug mit einem Hochvoltbordnetz mit den Merkmalen des Anspruchs 1 und ein Verfahren zum Betrieb des Hochvoltbordnetzes mit den Merkmalen des Anspruchs 6.

Vorteilhafte Ausgestaltungen der Erfindung sind Gegenstand der Unteransprüche.

Ein Fahrzeug weist ein elektrisches Hochvoltbordnetz auf. Unter dem Begriff "Hochvolt", auch mit HV abgekürzt, ist insbesondere eine elektrische Gleichspannung zu verstehen, die insbesondere größer als etwa 60 V ist. Insbesondere ist der Begriff "Hochvolt" konform zur Norm ECE R 100 auszulegen.

Das Hochvoltbordnetz weist eine Traktionsbatterie, einen Ladeanschluss zum elektrischen Koppeln mit einer fahrzeugexternen Gleichstromladestation, eine Hochvoltpluspotentialleitung, eine Hochvoltminuspotentialleitung und eine Bezugspotentialleitung auf. Die Traktionsbatterie ist zur elektrischen Energieversorgung mindestens einer elektrischen Antriebsmaschine zum Antrieb des Fahrzeugs vorgesehen. Das Fahrzeug ist somit insbesondere ein Elektrofahrzeug oder Hybridfahrzeug.

In einer erfindungsgemäßen Ausführungsform ist vorgesehen, dass in einer der Hochvoltpotentialleitungen ein Gleichspannungswandler angeordnet ist und zwischen der anderen Hochvoltpotentialleitung und der Bezugspotentialleitung eine Reihenschaltung aus einem Varistor und einer Strommessvorrichtung angeordnet ist. Des Weiteren ist in dieser erfindungsgemäßen Ausführungsform eine mit der Strommessvorrichtung und dem Gleichspannungswandler gekoppelte Verarbeitungseinheit vorgesehen, die ausgebildet und eingerichtet ist, den Gleichspannungswandler abzuschalten, wenn eine von der Strommessvorrichtung gemessene Stromstärke mindestens einen vorgegebenen Grenzwert überschreitet.

In einem erfindungsgemäßen Verfahren zum Betrieb des Hochvoltbordnetzes des Fahrzeugs dieser Ausführungsform ist entsprechend vorgesehen, dass die Strommessvorrichtung durch die Verarbeitungseinheit ausgewertet wird und der Gleichspannungswandler abgeschaltet wird, wenn die von der Strommessvorrichtung gemessene Stromstärke mindestens einen vorgegebenen Grenzwert überschreitet.

In einer alternativen erfindungsgemäßen Ausführungsform ist vorgesehen, dass in beiden Hochvoltpotentialleitungen jeweils ein Gleichspannungswandler angeordnet ist und zwischen jeder der Hochvoltpotentialleitungen und der Bezugspotentialleitung jeweils eine Reihenschaltung aus einem Varistor und einer Strommessvorrichtung angeordnet ist. Des Weiteren ist in dieser alternativen erfindungsgemäßen Ausführungsform eine mit der jeweiligen Strommessvorrichtung und den Gleichspannungswandlern gekoppelte Verarbeitungseinheit vorgesehen, die ausgebildet und eingerichtet ist, die Gleichspannungswandler abzuschalten, wenn eine von mindestens einer der Strommessvorrichtungen gemessene Stromstärke mindestens einen vorgegebenen Grenzwert überschreitet.

In einem erfindungsgemäßen Verfahren zum Betrieb des Hochvoltbordnetzes des Fahrzeugs dieser alternativen Ausführungsform ist entsprechend vorgesehen, dass die Strommessvorrichtungen durch die Verarbeitungseinheit ausgewertet werden und die Gleichspannungswandler abgeschaltet werden, wenn die von mindestens einer der Strommessvorrichtungen gemessene Stromstärke mindestens einen vorgegebenen Grenzwert überschreitet.

Durch die Verwendung des Gleichspannungswandlers oder der beiden Gleichspannungswandler wird es ermöglicht, die Traktionsbatterie an einer Gleichstromladestation mit einer Ladespannung zu laden, die geringer ist als die Batteriespannung der Traktionsbatterie, beispielsweise das Laden einer 800V-Traktionsbatterie an einer Gleichstromladestation mit einer Ladespannung von 400V oder 500V. Der Gleichspannungswandler oder der jeweilige Gleichspannungswandler ist insbesondere als ein galvanisch gekoppelter Gleichspannungswandler ausgebildet. Dies ist eine kostengünstige und bauraumsparende Lösung. Problematisch ist jedoch, dass bei Auftreten eines Isolationsfehlers im Fahrzeug als direkte Folge ein weiterer Isolationsfehler im gegengesetzten Hochvoltpotential auf Seiten der Gleichstromladestation eintreten kann. Manche Gleichstromladestationshersteller verbauen zum Schutz der Isolation einen Varistor zwischen dem Bezugspotential und dem Hochvoltpluspotential bzw. zwischen dem Bezugspotential und dem Hochvoltminuspotential in der Gleichstromladestation. Dieser Varistor in der Gleichstromladestation besitzt beispielsweise eine Klemmspannung von 500V bis 550V. Löst dieser Varistor in der Gleichstromladestation aus oder wird die Isolation zerstört, wird ein Kurzschluss der Traktionsbatterie erzeugt, der im so genannten CHAdeMO-Ladestandard zu einer Zerstörung einer Massepotentialleitung in einem Ladekabel führt, mit welchem das Fahrzeug mit der Gleichstromladestation elektrisch gekoppelt ist, denn diese Massepotentialleitung ist nur sehr dünn ausgeführt. Als Grenzwerte sind inzwischen definiert: 100mAs zum Schutz des Varistors in der Gleichstromladestation und 7000As² zum Schutz der Massepotentialleitung im Ladekabel.

Dieses Problem wird durch die erfindungsgemäße Lösung gelöst, denn wenn bei der erfindungsgemäßen Lösung im Hochvoltsystem des Fahrzeugs ein Isolationsfehler auftritt, wodurch die Isolation auf Seiten der Gleichstromladestation einer zu hohen anliegenden Spannung ausgesetzt werden könnte, dann geht zunächst der betreffende Varistor des Hochvoltbordnetzes des Fahrzeugs in einen niederohmigen Zustand über. Hierfür ist insbesondere vorgesehen, dass der Varistor bei der oben erstgenannten erfindungsgemäßen Ausführungsform oder der jeweilige Varistor bei der oben genannten alternativen erfindungsgemäßen Ausführungsform derart ausgebildet ist, dass er bei Überschreiten einer vorgegebenen Spannung, die kleiner ist als eine Auslegungsspannung von beispielsweise 500V der fahrzeugexternen Gleichstromladestation, für deren elektrisches Koppeln der Ladeanschluss ausgebildet ist, in den niederohmigen Zustand übergeht. Diese vorgegebene Spannung beträgt somit beispielsweise 450V. Es ist somit insbesondere vorgesehen, dass der Varistor oder der jeweilige Varistor eine entsprechende Kennlinie aufweist. Er geht somit schon vor dem Überschreiten der Auslegungsspannung der Gleichstromladestation in den niederohmigen Zustand über.

Mittels der Strommessung der betreffenden Strommessvorrichtung kann der entstehende leitende Pfad schnell und störungsfrei gemessen werden. Über die Auswertung mittels der Verarbeitungseinheit wird dieser gemessene Strom, d. h. dessen Stromstärke, mit dem mindestens einen vorgegebenen Grenzwert oder mit mehreren vorgegebenen Grenzwerten verglichen und bei Notwendigkeit, d. h. bei Überschreiten, wird der Gleichspannungswandler oder werden die Gleichspannungswandler somit sehr schnell abgeschaltet, d. h. in seiner/ihrer Funktion gestoppt.

Beispielsweise ist vorgesehen, dass die Verarbeitungseinheit mit Schützen der Traktionsbatterie und/oder mit einem in mindestens einer der Hochvoltpotentialleitungen angeordneten Trennelement gekoppelt ist. Sie ist dann ausgebildet und eingerichtet, die Schütze und/oder das mindestens eine Trennelement zum Trennen zu aktivieren, wenn in der oben erstgenannten erfindungsgemäßen Ausführungsform die von der Strommessvorrichtung oder in der oben genannten alternativen erfindungsgemäßen Ausführungsform die von mindestens einer der beiden Strommessvorrichtungen gemessene Stromstärke den mindestens einen vorgegebenen Grenzwert überschreitet. Entsprechend ist im Verfahren zum Betrieb beispielsweise vorgesehen, dass die Verarbeitungseinheit die Schütze und/oder das mindestens eine Trennelement zum Trennen aktiviert, wenn in der oben erstgenannten erfindungsgemäßen Ausführungsform die von der Strommessvorrichtung oder in der oben genannten alternativen erfindungsgemäßen Ausführungsform die von mindestens einer der beiden Strommessvorrichtungen gemessene Stromstärke den mindestens einen vorgegebenen Grenzwert überschreitet. Dadurch wird des Weiteren, d. h. zusätzlich zu dem oben beschriebenen Abschalten des Gleichspannungswandlers bzw. der Gleichspannungswandler, zur Behebung des Kurzschlussstroms sehr schnell veranlasst, dass die Traktionsbatterie ihre Schütze öffnet und/oder eines oder mehrere Trennelemente zur Unterbrechung des Kurzschlussstroms aktiviert werden. Das Trennelement oder das jeweilige Trennelement ist beispielsweise als Halbleiterschalter, Diode oder Sprengsicherung, d. h. als pyrotechnisches Trennelement, auch als Pyro-Fuse bezeichnet, ausgebildet. Da der Strom in diesem frühen Zeitpunkt bei niederohmigerem Varistor noch geringe Werte annimmt, im Vergleich zu einem Kurzschluss der Traktionsbatterie über einen leitfähigen Isolationskurzschluss in der Gleichstromladestation, kann/können das Trennelement oder die Trennelemente und beispielsweise auch die Schütze der Traktionsbatterie kleiner gestaltet werden, da keine Auslegung auf den Kurzschlussstrom erforderlich ist.

Die erfindungsgemäße Lösung ermöglicht somit über die Strommessung ein schnelles und störungsfreies Erkennen eines Überschreitens einer definierten Verschiebung der Hochvoltpotentiale im Hochvoltbordnetz des Fahrzeugs und dadurch ein sehr frühes Stoppen der Funktion des Gleichspannungswandlers oder der Gleichspannungswandler. Dadurch wird der Varistor in der Gleichstromladestation bzw. die Isolation in der Gleichstromladestation nicht durch eine Überspannung überlastet, da die Spannung durch den Varistor im Hochvoltbordnetz auf einen Wert unterhalb der Isolationsauslegungsspannung begrenzt wird. Zudem wird dadurch vermieden, dass der Varistor in der Gleichstromladestation und die Massepotentialleitung des Ladekabels durch einen hohen Strom geschädigt oder zerstört werden, denn durch den Varistor im Hochvoltbordnetz wird der entstehende Traktionsbatteriekurzschlussstrom innerhalb des Fahrzeugs gehalten. Durch die erfindungsgemäße Lösung werden des Weiteren fehlerhafte Ladeabbrüche vermieden, da, anders als bei anderen Lösungen, eine störungsfreie Fehlererkennung erreicht wird. Zudem kann durch die niedrigere Auslösespannung des Varistors im Hochvoltbordnetz der entstehende Fehler schneller erkannt werden, wodurch die dadurch entstehenden Batterieströme noch durch den Widerstand des Varistors begrenzt sind. Dadurch wird der Einsatz kleinerer Trennelemente und/oder Schütze zum Abschalten ermöglicht, da keine Auslegung auf einen hohen Kurzschlussstrom erforderlich ist.

Zusammengefasst ermöglicht die beschriebene Lösung bei einem Isolationsfehler anhand der Auswertung der Strommessung und dem Vergleich mit einem oder mehreren vorgegebenen Grenzwerten der Stromstärke über den niederohmigen Varistor eine schnelle Einleitung von Sicherheitsmaßnahmen, insbesondere ein frühzeitiges Abschalten des Gleichspannungswandlers bzw. der Gleichspannungswandler und beispielsweise ein frühzeitiges Öffnen von Schützen und/oder Trennelementen schon bei geringen Strömen, woraus die weiteren geschilderten Vorteile resultieren.

Ausführungsbeispiele der Erfindung werden im Folgenden anhand einer Zeichnung näher erläutert.

Dabei zeigt:

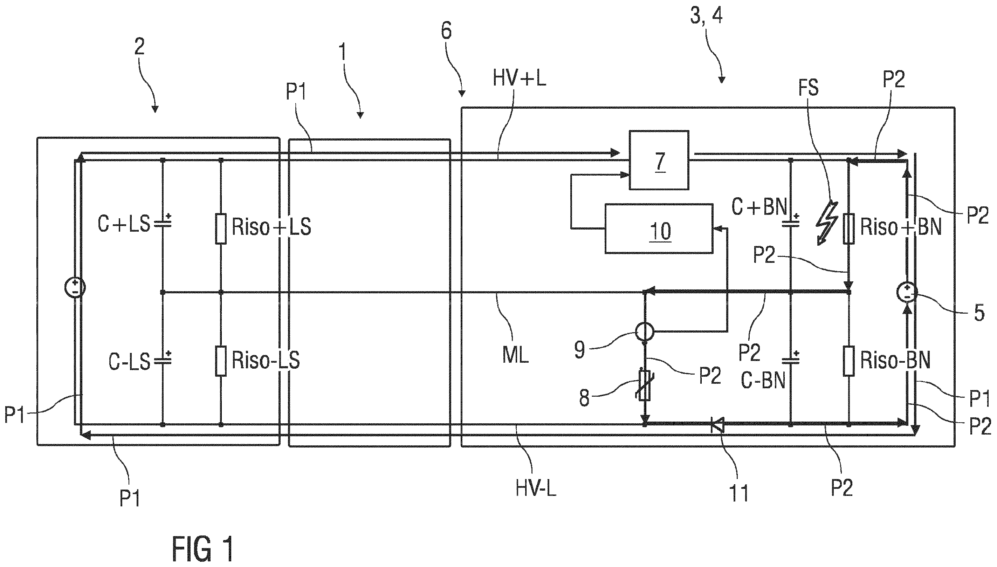

- Fig. 1: schematisch eine Ausführungsform eines über ein Ladekabel mit einer Gleichstromladestation elektrisch verbundenen Hochvoltbordnetzes eines Fahrzeugs.

Figur 1 zeigt eine schematische Darstellung eines über ein Ladekabel 1 mit einer Gleichstromladestation 2 elektrisch verbundenen Hochvoltbordnetzes 3 eines Fahrzeugs 4.

Das Fahrzeug 4 ist insbesondere ein Elektrofahrzeug oder Hybridfahrzeug, d. h. es weist zu seinem Antrieb mindestens eine elektrische Antriebsmaschine auf. Zur elektrischen Energieversorgung dieser mindestens einen elektrischen Antriebsmaschine weist das Hochvoltbordnetz 3 eine Traktionsbatterie 5 auf.

Das Hochvoltbordnetz 3 weist des Weiteren einen Ladeanschluss 6 zum elektrischen Koppeln mit der fahrzeugexternen Gleichstromladestation 2 auf. Dies erfolgt über das Ladekabel 1, welches hierfür mit der Gleichstromladestation 2 und dem Ladeanschluss 6 elektrisch gekoppelt wird oder ist.

Das Hochvoltbordnetz 3 weist zudem eine Hochvoltpluspotentialleitung HV+L, eine Hochvoltminuspotentialleitung HV-L und eine Bezugspotentialleitung ML, insbesondere Massepotentialleitung, auf. Dies gilt ebenso für das Ladekabel 1 und die Gleichstromladestation 2, wie in Figur 1 gezeigt.

Des Weiteren sind insbesondere ein Isolationswiderstand Riso+BN zwischen der Hochvoltpluspotentialleitung HV+L und der Bezugspotentialleitung ML, ein Isolationswiderstand Riso-BN zwischen der Hochvoltminuspotentialleitung HV-L und der Bezugspotentialleitung ML, ein Y-Kondensator C+BN zwischen Hochvoltpluspotentialleitung HV+L und der Bezugspotentialleitung ML und ein Y-Kondensator C-BN zwischen Hochvoltminuspotentialleitung HV-L und der Bezugspotentialleitung ML im Hochvoltbordnetz 3 vorgesehen.

Ebenso sind in der Gleichstromladestation 2 insbesondere ein Isolationswiderstand Riso+LS zwischen der Hochvoltpluspotentialleitung HV+L und der Bezugspotentialleitung ML, ein Isolationswiderstand Riso-LS zwischen der Hochvoltminuspotentialleitung HV-L und der Bezugspotentialleitung ML, ein Y-Kondensator C+LS zwischen der Hochvoltpluspotentialleitung HV+L und der Bezugspotentialleitung ML und ein Y-Kondensator C-LS zwischen der Hochvoltminuspotentialleitung HV-L und der Bezugspotentialleitung ML vorgesehen.

Das Hochvoltbordnetz 3 ist insbesondere dazu ausgebildet, ein Laden der Traktionsbatterie 5 an einer Gleichstromladestation 2 mit einer Ladespannung zu laden, die geringer ist als eine Batteriespannung der Traktionsbatterie 5, beispielsweise das Laden einer 800V-Traktionsbatterie an einer Gleichstromladestation 2 mit einer Ladespannung von 400V oder 500V. Beispielsweise ist eine Traktionsbatterie 5 mit einer Batteriespannung von 800V vorgesehen und die Gleichstromladestation 2 weist eine auch als Auslegungsspannung bezeichnete Ladespannung von 500V auf. Um das beschriebene Laden der Traktionsbatterie 5 zu ermöglichen, weist das Hochvoltbordnetz 3 einen Gleichspannungswandler 7 auf, welcher in der dargestellten Ausführungsform in der Hochvoltpluspotentialleitung HV+L des Hochvoltbordnetzes 3 angeordnet ist. Der Gleichspannungswandler 7 ist als ein galvanisch gekoppelter Gleichspannungswandler 7 ausgebildet.

Problematisch ist jedoch, dass bei Auftreten eines Isolationsfehlers im Fahrzeug 4 als direkte Folge ein weiterer Isolationsfehler im gegengesetzten Hochvoltpotential auf Seiten der Gleichstromladestation 2 eintreten kann. Manche Gleichstromladestationshersteller verbauen zum Schutz der Isolation einen hier nicht dargestellten Varistor zwischen dem Bezugspotential und dem Hochvoltpluspotential bzw. zwischen dem Bezugspotential und dem Hochvoltminuspotential in der Gleichstromladestation 2. Dieser Varistor in der Gleichstromladestation 2 besitzt beispielsweise eine Klemmspannung von 500V bis 550V. Löst dieser Varistor in der Gleichstromladestation 2 aus oder wird die Isolation zerstört, wird ein Kurzschluss der Traktionsbatterie 5 erzeugt, der im so genannten CHAdeMO-Ladestandard zu einer Zerstörung einer Massepotentialleitung, d. h. der Bezugspotentialleitung ML, im Ladekabel 1 führt, denn diese Massepotentialleitung ist nur sehr dünn ausgeführt. Als Grenzwerte sind inzwischen definiert: 100mAs zum Schutz des Varistors in der Gleichstromladestation 2 und 7000As² zum Schutz der Massepotentialleitung im Ladekabel 1.

In Figur 1 ist mittels erster Pfeile P1 der Stromfluss des normalen Ladestroms während des Ladens der Traktionsbatterie 5 dargestellt. Des Weiteren ist in Figur 1 der beschriebene Fehlerfall mittels eines Fehlersymbols FS dargestellt. Im dargestellten Beispiel sind durch den Isolationsfehler im Fahrzeug 4 das Hochvoltpluspotential und das Bezugspotential leitend verbunden, wie durch die Verbindungslinie durch den Isolationswiderstand Riso+BN hindurch dargestellt. Mittels zweiter Pfeile P2 ist der dadurch im Hochvoltbordnetz 3 fließende Kurzschlussstrom dargestellt.

Um das geschilderte Problem zu lösen, ist bei der dargestellten Ausführungsform vorgesehen, dass zwischen der Hochvoltminuspotentialleitung HV-L und der Bezugspotentialleitung ML eine Reihenschaltung aus einem Varistor 8 und einer Strommessvorrichtung 9 angeordnet ist.

In einer nicht dargestellten alternativen Ausführungsform ist der Gleichspannungswandler 7 in der Hochvoltminuspotentialleitung HV-L des Hochvoltbordnetzes 3 angeordnet und ebenfalls als ein galvanisch gekoppelter Gleichspannungswandler 7 ausgebildet. Dann ist entsprechend vorgesehen, dass zwischen der Hochvoltpluspotentialleitung HV+L und der Bezugspotentialleitung ML die Reihenschaltung aus dem Varistor 8 und der Strommessvorrichtung 9 angeordnet ist. Hier ist der entsprechend korrespondierende Fehlerfall erfassbar, dass durch den Isolationsfehler im Fahrzeug 4 das Hochvoltminuspotential und das Bezugspotential leitend verbunden sind.

Sowohl in der dargestellten Ausführungsform als auch in der nicht dargestellten anderen Ausführungsform ist des Weiteren eine mit der Strommessvorrichtung 9 und dem Gleichspannungswandler 7 gekoppelte Verarbeitungseinheit 10 vorgesehen, die ausgebildet und eingerichtet ist, den Gleichspannungswandler 7 abzuschalten, wenn eine von der Strommessvorrichtung 9 gemessene Stromstärke mindestens einen vorgegebenen Grenzwert überschreitet.

In einem Verfahren zum Betrieb des Hochvoltbordnetzes 3 des Fahrzeugs 4 ist entsprechend vorgesehen, dass die Strommessvorrichtung 9 durch die Verarbeitungseinheit 10 ausgewertet wird und der Gleichspannungswandler 7 abgeschaltet wird, wenn die von der Strommessvorrichtung 9 gemessene Stromstärke mindestens einen vorgegebenen Grenzwert überschreitet.

Das geschilderte Problem wird mittels der beschriebenen Ausführungsformen des Hochvoltbordnetzes 3 dadurch gelöst, dass dann, wenn der Isolationsfehler im Fahrzeug 4 auftritt, wodurch die Isolation auf Seiten der Gleichstromladestation 2 einer zu hohen anliegenden Spannung ausgesetzt werden könnte, zunächst der Varistor 8 des Hochvoltbordnetzes 3 des Fahrzeugs 4 in einen niederohmigen Zustand übergeht. Um dies sicherzustellen, ist vorgesehen, dass der Varistor 8 derart ausgebildet ist, dass er bei Überschreiten einer vorgegebenen Spannung, die kleiner ist als die Auslegungsspannung von beispielsweise 500V der fahrzeugexternen Gleichstromladestation 2, in den niederohmigen Zustand übergeht. Diese vorgegebene Spannung beträgt somit beispielsweise 450V. Es ist somit insbesondere vorgesehen, dass der Varistor 8 eine entsprechende Kennlinie aufweist. Er geht somit schon vor dem Überschreiten der Auslegungsspannung der Gleichstromladestation 2 in den niederohmigen Zustand über.

Mittels der Strommessung der Strommessvorrichtung 9 kann der entstehende leitende Pfad schnell und störungsfrei gemessen werden. Über die Auswertung mittels der Verarbeitungseinheit 10 wird dieser gemessene Strom, d. h. dessen Stromstärke, mit dem mindestens einen vorgegebenen Grenzwert oder mit mehreren vorgegebenen Grenzwerten verglichen und bei Notwendigkeit, d. h. bei Überschreiten, wird der Gleichspannungswandler 7 somit sehr schnell abgeschaltet, d. h. in seiner Funktion gestoppt.

Zusätzlich kann beispielsweise vorgesehen sein, dass die Verarbeitungseinheit 10 mit hier nicht dargestellten Schützen der Traktionsbatterie 5 und/oder mit einem in mindestens einer der Hochvoltpotentialleitungen HV+L, HV-L des Hochvoltbordnetzes 3 angeordneten Trennelement 11 gekoppelt ist. Sie ist dann ausgebildet und eingerichtet, die Schütze und/oder das mindestens eine Trennelement 11 zum Trennen zu aktivieren, wenn die von der Strommessvorrichtung 9 gemessene Stromstärke den mindestens einen vorgegebenen Grenzwert überschreitet. Entsprechend ist im Verfahren zum Betrieb beispielsweise vorgesehen, dass die Verarbeitungseinheit 10 die Schütze und/oder das mindestens eine Trennelement 11 zum Trennen aktiviert, wenn die von der Strommessvorrichtung 9 gemessene Stromstärke den mindestens einen vorgegebenen Grenzwert überschreitet. Dadurch wird des Weiteren, d. h. zusätzlich zu dem oben beschriebenen Abschalten des Gleichspannungswandlers 7 zur Behebung des Kurzschlussstroms sehr schnell veranlasst, dass die Traktionsbatterie 5 ihr Schütze öffnet und/oder eines oder mehrere Trennelemente 11 zur Unterbrechung des Kurzschlussstroms aktiviert werden. Das Trennelement 11 oder das jeweilige Trennelement 11 ist beispielsweise, wie im dargestellten Beispiel gezeigt, als Diode, oder als Halbleiterschalter oder Sprengsicherung ausgebildet. Da der Strom in diesem frühen Zeitpunkt bei niederohmigerem Varistor 8 noch geringe Werte annimmt im Vergleich zu einem Kurzschluss der Traktionsbatterie 5 über einen leitfähigen Isolationskurzschluss in der Gleichstromladestation 2, kann/können das Trennelement 11 oder die Trennelemente 11 und beispielsweise auch die Schütze der Traktionsbatterie 5 kleiner gestaltet werden, da keine Auslegung auf den Kurzschlussstrom erforderlich ist.

In einer weiteren nicht dargestellten Ausführungsform ist in der Hochvoltpluspotentialleitung HV+L und in der Hochvoltminuspotentialleitung HV-L jeweils ein Gleichspannungswandler 7 des Hochvoltbordnetzes 3 angeordnet und ebenfalls als ein galvanisch gekoppelter Gleichspannungswandler 7 ausgebildet. Entsprechend ist vorgesehen, dass zwischen jeder der Hochvoltpotentialleitungen HV+L, HV-L und der Bezugspotentialleitung ML jeweils eine Reihenschaltung aus einem Varistor 8 und einer Strommessvorrichtung 9 angeordnet ist. Hier sind der Fehlerfall erfassbar, dass durch den Isolationsfehler im Fahrzeug 4 das Hochvoltpluspotential und das Bezugspotential leitend verbunden sind, und der Fehlerfall erfassbar, dass durch den Isolationsfehler im Fahrzeug 4 das Hochvoltminuspotential und das Bezugspotential leitend verbunden sind.

Bei dieser Ausführungsform ist entsprechend eine mit der jeweiligen Strommessvorrichtung 9 und den Gleichspannungswandlern 7 gekoppelte Verarbeitungseinheit 10 vorgesehen, die ausgebildet und eingerichtet ist, die Gleichspannungswandler 7 abzuschalten, wenn eine von mindestens einer der Strommessvorrichtungen 9 gemessene Stromstärke mindestens einen vorgegebenen Grenzwert überschreitet.

In einem Verfahren zum Betrieb des Hochvoltbordnetzes 3 des Fahrzeugs 4 ist entsprechend vorgesehen, dass die Strommessvorrichtungen 9 durch die Verarbeitungseinheit 10 ausgewertet werden und die Gleichspannungswandler 7 abgeschaltet werden, wenn die von mindestens einer der Strommessvorrichtungen 9 gemessene Stromstärke mindestens einen vorgegebenen Grenzwert überschreitet.

Das geschilderte Problem wird auch mittels dieser Ausführungsform des Hochvoltbordnetzes 3 dadurch gelöst, dass dann, wenn der jeweilige Isolationsfehler im Fahrzeug 4 auftritt, wodurch die Isolation auf Seiten der Gleichstromladestation 2 einer zu hohen anliegenden Spannung ausgesetzt werden könnte, zunächst der betreffende Varistor 8 des Hochvoltbordnetzes 3 des Fahrzeugs 4 in einen niederohmigen Zustand übergeht. Hierfür ist bei dieser Ausführungsform entsprechend insbesondere vorgesehen, dass der jeweilige Varistor 8 derart ausgebildet ist, dass er bei Überschreiten einer vorgegebenen Spannung, die kleiner ist als die Auslegungsspannung von beispielsweise 500V der fahrzeugexternen Gleichstromladestation 2 in den niederohmigen Zustand übergeht. Diese vorgegebene Spannung beträgt somit beispielsweise 450V. Es ist somit insbesondere vorgesehen, dass der jeweilige Varistor 8 eine entsprechende Kennlinie aufweist. Er geht somit schon vor dem Überschreiten der Auslegungsspannung der Gleichstromladestation 2 in den niederohmigen Zustand über. In dieser Ausführungsform sind somit die beiden Varistoren 8 jeweils derart ausgebildet.

Auch bei dieser Ausführungsform kann entsprechend mittels der Strommessung der betreffenden Strommessvorrichtung 9 der entstehende leitende Pfad schnell und störungsfrei gemessen werden. Über die Auswertung mittels der Verarbeitungseinheit 10 wird dieser gemessene Strom, d. h. dessen Stromstärke, mit dem mindestens einen vorgegebenen Grenzwert oder mit mehreren vorgegebenen Grenzwerten verglichen und bei Notwendigkeit, d. h. bei Überschreiten, werden die Gleichspannungswandler 7 somit sehr schnell abgeschaltet, d. h. in ihrer Funktion gestoppt.

Zusätzlich kann auch bei dieser Ausführungsform vorgesehen sein, dass die Verarbeitungseinheit 10 mit Schützen der Traktionsbatterie 5 und/oder mit einem in mindestens einer der Hochvoltpotentialleitungen HV+L, HV-L des Hochvoltbordnetzes 3 angeordneten Trennelement 11 gekoppelt ist. Sie ist dann ausgebildet und eingerichtet, die Schütze und/oder das mindestens eine Trennelement 11 zum Trennen zu aktivieren, wenn die von mindestens einer der beiden Strommessvorrichtungen 9 gemessene Stromstärke den mindestens einen vorgegebenen Grenzwert überschreitet. Entsprechend ist im Verfahren zum Betrieb beispielsweise vorgesehen, dass die Verarbeitungseinheit 10 die Schütze und/oder das mindestens eine Trennelement 11 zum Trennen aktiviert, wenn die von mindestens einer der beiden Strommessvorrichtungen 9 gemessene Stromstärke den mindestens einen vorgegebenen Grenzwert überschreitet. Dadurch wird des Weiteren, d. h. zusätzlich zu dem oben beschriebenen Abschalten der Gleichspannungswandler 7, zur Behebung des Kurzschlussstroms sehr schnell veranlasst, dass die Traktionsbatterie 5 ihr Schütze öffnet und/oder eines oder mehrere Trennelemente 11 zur Unterbrechung des Kurzschlussstroms aktiviert werden. Das Trennelement 11 oder das jeweilige Trennelement 11 kann auch hier beispielsweise als Halbleiterschalter, Diode oder Sprengsicherung ausgebildet sein. Da der Strom in diesem frühen Zeitpunkt bei niederohmigerem Varistor 8 noch geringe Werte annimmt im Vergleich zu einem Kurzschluss der Traktionsbatterie 5 über einen leitfähigen Isolationskurzschluss in der Gleichstromladestation 2, kann/können das Trennelement 11 oder die Trennelemente 11 und beispielsweise auch die Schütze der Traktionsbatterie 5 kleiner gestaltet werden, da keine Auslegung auf den Kurzschlussstrom erforderlich ist.

### Bezugszeichenliste

- 1: Ladekabel
- 2: Gleichstromladestation
- 3: Hochvoltbordnetz
- 4: Fahrzeug
- 5: Traktionsbatterie
- 6: Ladeanschluss
- 7: Gleichspannungswandler
- 8: Varistor
- 9: Strommessvorrichtung
- 10: Verarbeitungseinheit
- 11: Trennelement

- C+BN: Y-Kondensator Hochvoltbordnetz
- C-BN: Y-Kondensator Hochvoltbordnetz
- C+LS: Y-Kondensator Ladestation
- C-LS: Y-Kondensator Ladestation
- FS: Fehlersymbol
- HV+L: Hochvoltpluspotentialleitung
- HV-L: Hochvoltminuspotentialleitung
- ML: Bezugspotentialleitung
- P1: erster Pfeil
- P2: zweiter Pfeil
- Riso+BN: Isolationswiderstand Hochvoltbordnetz
- Riso-BN: Isolationswiderstand Hochvoltbordnetz
- Riso+LS: Isolationswiderstand Ladestation
- Riso-LS: Isolationswiderstand Ladestation

## Patentansprüche

1. Fahrzeug (4) mit einem Hochvoltbordnetz (3), wobei das Hochvoltbordnetz (3) aufweist:
- eine Traktionsbatterie (5),
- einen Ladeanschluss (6) zum elektrischen Koppeln mit einer fahrzeugexternen Gleichstromladestation (2),
- eine Hochvoltpluspotentialleitung (HV+L),
- eine Hochvoltminuspotentialleitung (HV-L), und
- eine Bezugspotentialleitung (ML), wobei
- in einer der Hochvoltpotentialleitungen (HV+L, HV-L) ein Gleichspannungswandler (7) angeordnet ist und zwischen der anderen Hochvoltpotentialleitung (HV-L, HV+L) und der Bezugspotentialleitung (ML) eine Reihenschaltung aus einem Varistor (8) und einer Strommessvorrichtung (9) angeordnet ist, wobei eine mit der Strommessvorrichtung (9) und dem Gleichspannungswandler (7) gekoppelte Verarbeitungseinheit (10) vorgesehen ist, die ausgebildet und eingerichtet ist, den Gleichspannungswandler (7) abzuschalten, so dass die Funktion des Gleichspannungswandler (7) gestoppt ist, wenn eine von der Strommessvorrichtung (9) gemessene Stromstärke mindestens einen vorgegebenen Grenzwert überschreitet, oder
- in beiden Hochvoltpotentialleitungen (HV+L, HV-L) jeweils ein Gleichspannungswandler (7) angeordnet ist und zwischen jeder der Hochvoltpotentialleitungen (HV+L, HV-L) und der Bezugspotentialleitung (ML) jeweils eine Reihenschaltung aus einem Varistor (8) und einer Strommessvorrichtung (9) angeordnet ist, wobei eine mit der jeweiligen Strommessvorrichtung (9) und den Gleichspannungswandlern (7) gekoppelte Verarbeitungseinheit (10) vorgesehen ist, die ausgebildet und eingerichtet ist, die Gleichspannungswandler (7) abzuschalten, so dass die Funktion des Gleichspannungswandler (7) gestoppt ist, wenn eine von mindestens einer der Strommessvorrichtungen (9) gemessene Stromstärke mindestens einen vorgegebenen Grenzwert überschreitet.

2. Fahrzeug (4) nach Anspruch 1,
**dadurch gekennzeichnet, dass** der Varistor (8) oder der jeweilige Varistor (8) derart ausgebildet ist, dass er bei Überschreiten einer vorgegebenen Spannung, die kleiner ist als eine Auslegungsspannung der fahrzeugexternen Gleichstromladestation (2), für deren elektrisches Koppeln der Ladeanschluss (6) ausgebildet ist, in einen niederohmigen Zustand übergeht.

3. Fahrzeug (4) nach einem der vorhergehenden Ansprüche,
**dadurch gekennzeichnet, dass** der Gleichspannungswandler (7) oder der jeweilige Gleichspannungswandler (7) als ein galvanisch gekoppelter Gleichspannungswandler (7) ausgebildet ist.

4. Fahrzeug (4) nach einem der vorhergehenden Ansprüche,
**dadurch gekennzeichnet, dass** die Verarbeitungseinheit (10) mit Schützen der Traktionsbatterie (5) und/oder mit einem in mindestens einer der Hochvoltpotentialleitungen (HV+L, HV-L) angeordneten Trennelement (11) gekoppelt ist und ausgebildet und eingerichtet ist, die Schütze und/oder das mindestens eine Trennelement (11) zum Trennen zu aktivieren, wenn die von der Strommessvorrichtung (9) oder von mindestens einer der beiden Strommessvorrichtungen (9) gemessene Stromstärke den mindestens einen vorgegebenen Grenzwert überschreitet.

5. Fahrzeug (4) nach Anspruch 4, **dadurch gekennzeichnet, dass** das Trennelement (11) als Halbleiterschalter, Diode, oder Sprengsicherung ausgebildet ist.

6. Verfahren zum Betrieb eines Hochvoltbordnetzes (3) eines Fahrzeugs (4) nach einem der vorhergehenden Ansprüchen, wobei die Strommessvorrichtung (9) durch die Verarbeitungseinheit (10) ausgewertet wird und der Gleichspannungswandler (7) abgeschaltet wird, wenn die von der Strommessvorrichtung (9) gemessene Stromstärke mindestens einen vorgegebenen Grenzwert überschreitet, oder
- die Strommessvorrichtungen (9) durch die Verarbeitungseinheit (10) ausgewertet werden und die Gleichspannungswandler (7) abgeschaltet werden, wenn die von mindestens einer der Strommessvorrichtungen (9) gemessene Stromstärke mindestens einen vorgegebenen Grenzwert überschreitet.

7. Verfahren nach Anspruch 6,
**dadurch gekennzeichnet, dass** die Verarbeitungseinheit (10) die Schütze und/oder das mindestens eine Trennelement (11) zum Trennen aktiviert, wenn die von der Strommessvorrichtung (9) oder von mindestens einer der beiden Strommessvorrichtungen (9) gemessene Stromstärke den mindestens einen vorgegebenen Grenzwert überschreitet.

## Claims

1. Vehicle (4) with a high-voltage electrical system (3), wherein the high-voltage electrical system (3) comprises:
- a traction battery (5),
- a charging connection (6) for electrical coupling with a vehicle-external DC charging station (2),
- a high-voltage positive potential line (HV+L),
- a high-voltage negative potential line (HV-L), and
- a reference potential line (ML), wherein
- a DC-DC converter (7) is arranged in one of the high-voltage potential lines (HV+L, HV-L), and a series circuit comprising a varistor (8) and a current measuring device (9) is arranged between the other high-voltage potential line (HV-L, HV+L) and the reference potential line (ML), wherein a processing unit (10) coupled to the current measuring device (9) and the DC-DC converter (7) is provided, which processing unit is designed and configured to switch off the DC-DC converter (7) so that the function of the DC-DC converter (7) is stopped when a current measured by the current measuring device (9) exceeds at least one predetermined limit value, or
- a DC-DC converter (7) is arranged in each of the two high-voltage potential lines (HV+L, HV-L) and a series circuit comprising a varistor (8) and a current measuring device (9) is arranged between each of the high-voltage potential lines (HV+L, HV-L) and the reference potential line (ML), wherein a processing unit (10) coupled to the relevant current measuring device (9) and the DC-DC converters (7) is provided, which processing unit is designed and configured to switch off the DC-DC converters (7) so that the function of the DC-DC converter (7) is stopped when a current measured by at least one of the current measuring devices (9) exceeds at least one predetermined limit value.

2. Vehicle (4) according to claim 1,
**characterized in that** the varistor (8) or the relevant varistor (8) is designed such that it changes to a low-resistance state when a predetermined voltage is exceeded which is lower than a design voltage of the vehicle-external DC charging station (2), for the electrical coupling of which the charging connection (6) is designed.

3. Vehicle (4) according to either of the preceding claims,
**characterized in that** the DC-DC converter (7) or the relevant DC-DC converter (7) is designed as a galvanically coupled DC-DC converter (7).

4. Vehicle (4) according to any of the preceding claims,
**characterized in that** the processing unit (10) is coupled to contactors of the traction battery (5) and/or to a separating element (11) arranged in at least one of the high-voltage potential lines (HV+L, HV-L) and is designed and configured to activate the contactors and/or the at least one separating element (11) for separation when the current measured by the current measuring device (9) or by at least one of the two current measuring devices (9) exceeds the at least one predetermined limit value.

5. Vehicle (4) according to claim 4,
**characterized in that** the separating element (11) is designed as a semiconductor switch, diode, or explosion protection device.

6. Method for operating a high-voltage electrical system (3) of a vehicle (4) according to any of the preceding claims,
Wherein the current measuring device (9) is evaluated by the processing unit (10) and the DC-DC converter (7) is switched off when the current measured by the current measuring device (9) exceeds at least one predetermined limit value, or
- the current measuring devices (9) are evaluated by the processing unit (10) and the DC-DC converters (7) are switched off when the current measured by at least one of the current measuring devices (9) exceeds at least one predetermined limit value.

7. Method according to claim 6,
**characterized in that** the processing unit (10) activates the contactors and/or the at least one separating element (11) for separation when the current measured by the current measuring device (9) or by at least one of the two current measuring devices (9) exceeds the at least one predetermined limit value.

## Revendications

1. Véhicule (4) comportant un réseau de bord haute tension (3), dans lequel le réseau de bord haute tension (3) présente :
- une batterie de traction (5),
- une borne de charge (6) permettant le couplage électrique avec une station de charge à courant continu (2) externe au véhicule,
- une ligne de potentiel positif haute tension (HV+L),
- une ligne de potentiel négatif haute tension (HV-L), et
- une ligne de potentiel de référence (ML), dans lequel
- dans l'une des lignes de potentiel haute tension (HV+L, HV-L), est disposé un convertisseur continu-continu (7), et entre l'autre ligne de potentiel haute tension (HV-L, HV+L) et la ligne de potentiel de référence (ML) est disposé un montage en série constitué d'une varistance (8) et d'un dispositif de mesure de courant (9), dans lequel il est prévu une unité de traitement (10) couplée au dispositif de mesure de courant (9) et au convertisseur continu-continu (7), laquelle unité de traitement est conçue et configurée pour déconnecter le convertisseur continu-continu (7), en sorte que le fonctionnement du convertisseur continu-continu (7) est arrêté lorsqu'une intensité de courant mesurée par le dispositif de mesure de courant (9) dépasse au moins une valeur limite prédéterminée, ou
- dans les deux lignes de potentiel haute tension (HV+L, HV-L), est disposé respectivement un convertisseur continu-continu (7), et entre chacune des lignes de potentiel haute tension (HV+L, HV-L) et la ligne de potentiel de référence (ML), est disposé respectivement un montage en série constitué d'une varistance (8) et d'un dispositif de mesure de courant (9), dans lequel il est prévu une unité de traitement (10) couplée au dispositif de mesure de courant (9) respectif et aux convertisseurs continu-continu (7), laquelle unité de traitement est conçue et configurée pour déconnecter les convertisseurs continu-continu (7), en sorte que le fonctionnement du convertisseur continu-continu (7) est arrêté lorsqu'une intensité de courant mesurée par au moins l'un des dispositifs de mesure de courant (9) dépasse au moins une valeur limite prédéterminée.

2. Véhicule (4) selon la revendication 1,
**caractérisé en ce que** la varistance (8) ou la varistance respective (8) est conçue de telle sorte qu'elle passe à un état de faible résistance en cas de dépassement d'une tension prédéterminée qui est inférieure à une tension de conception de la station de charge à courant continu (2) externe au véhicule, tension de conception pour laquelle le couplage électrique de la borne de charge (6) est conçu.

3. Véhicule (4) selon l'une des revendications précédentes,
**caractérisé en ce que** le convertisseur continu-continu (7) ou le convertisseur continu-continu respectif (7) est conçu comme un convertisseur continu-continu à couplage galvanique (7).

4. Véhicule (4) selon l'une des revendications précédentes,
**caractérisé en ce que** l'unité de traitement (10) est couplée à des contacteurs de la batterie de traction (5) et/ou à un élément de séparation (11) disposé dans au moins l'une des lignes de potentiel haute tension (HV+L, HV-L) et est conçue et configurée pour activer les contacteurs et/ou l'au moins un élément de séparation (11) pour la séparation lorsque l'intensité de courant mesurée par le dispositif de mesure de courant (9) ou par au moins l'un des deux dispositifs de mesure de courant (9) dépasse l'au moins une valeur limite prédéterminée.

5. Véhicule (4) selon la revendication 4,
**caractérisé en ce que** l'élément de séparation (11) est conçu sous la forme d'un commutateur à semi-conducteur, d'une diode ou d'un fusible à explosion.

6. Procédé permettant de faire fonctionner un réseau de bord haute tension (3) d'un véhicule (4) selon l'une des revendications précédentes,
dans lequel
le dispositif de mesure de courant (9) est évalué par l'unité de traitement (10)
et le convertisseur continu-continu (7) est déconnecté lorsque l'intensité du courant mesurée par le dispositif de mesure de courant (9) dépasse au moins une valeur limite prédéterminée, ou
- les dispositifs de mesure de courant (9) sont évalués par l'unité de traitement (10) et les convertisseurs continu-continu (7) sont déconnectés lorsque l'intensité de courant mesurée par au moins l'un des dispositifs de mesure de courant (9) dépasse au moins une valeur limite prédéterminée.

7. Procédé selon la revendication 6,
**caractérisé en ce que** l'unité de traitement (10) active les contacteurs et/ou l'au moins un élément de séparation (11) pour la séparation lorsque l'intensité de courant mesurée par le dispositif de mesure de courant (9) ou par au moins l'un des deux dispositifs de mesure de courant (9) dépasse l'au moins une valeur limite prédéterminée.
